# EUROPEAN PATENT APPLICATION

(11) **EP 2 015 024 A2**
(43) Date of publication of application: **14.01.2009**
(21) Application number: 08158638.0
(22) Date of filing: 19.06.2008
(51) Int. Cl.: G01C 21/00, A63F 9/24, A63F 13/12, G06F 15/02

(54) **System and method for providing player interfacing layouts for geolocational activities**

(30) Priority: 19.06.2007 US 936560 P
(71) Applicant: GroundSpeak, Inc., Seattle, WA 98121-2741 (US)
(72) Inventor: Irish, Jeremy A, Seattle, WA 98109 (US)
(74) Representative: Curley, Donnacha John

(57) **Abstract**

A system (20) and method (40) for providing player interfacing layouts (45) for geolocational activities is provided. A plurality of cartridges (16) is maintained. Each cartridge (16) includes events for a geolocational activity. Each event is associated with a zone that includes stored geolocational data (163) defining points interconnected to form a logically enclosed space. One of the cartridges (16) is transferred to a wireless computing device (11) maintained by a user. A location of the wireless computing device (11) is determined by obtaining and processing geolocational data (163). One of the events is provided on one or more player interfacing layouts (45) when the stored geolocational data (163) for the zone associated with that event matches the location of the wireless computing device (11). A list of actions is displayed on the one or more player interfacing layouts (45). User input is processed by selecting one of the actions based on a request from the user. Output is presented in response to the user input.

## Description

### CROSS-REFERENCE TO RELATED APPLICATION

This non-provisional patent application claims priority under 35 U.S.C. § 119(e) to U.S. Provisional Patent application, Serial No. 60/936,560, filed June 19, 2007, the disclosure of which is incorporated by reference.

### TECHNICAL FIELD

The present invention relates in general to user interfaces and, in particular, to a system and method for providing player interfacing layouts for geolocational activities.

### BACKGROUND ART

Global Positioning System (GPS) receivers are widely available as personal, automotive, and integrated navigational aids, which include consumer electronics, such as cellular telephones and wireless personal data assistants (PDAs). When street names, points of interest, and other data are combined with maps, GPS receivers enable users to retrieve travel-related information. Programmable GPS receivers can also accommodate user-installable features that enhance or customize the functionality provided.

In particular, programmable GPS receivers can be used in a wide range of geolocational activities that combine geolocational data and programmed control or scenarios. For instance, to play geocaching sports, GPS receiver-equipped players navigate from a starting point until a cache or other goal is found. In one variation, competing players interact through wireless computing. In another variation, each player is tracked and clues are customized based on individual progress. Similarly, zone geolocational adventure activities require players to complete a series of tasks. The player moves through zones of "influence" defined by geolocational coordinates, which are stored in a downloadable script. Events are triggered as a player transitions between, within, and around a zone. Events include traveling from one location to another, interacting with a player or character, locating an object, solving a puzzle, and other activities.

Conventionally, creating new geolocational activities requires an ability to program in a programming language interpretable by a GPS receiver. The programming knowledge required depends in part upon the particular brand, model, and interface of the GPS receiver to be used. The level of expertise and sophistication needed is generally high. As a result, many users choose to rely on activities programmed by other enthusiasts that have uploaded their programmed activities for sharing. Frequently, however, the programming enthusiasts focus only on their own type of GPS receiver, even though the geolocational activity may be playable on other GPS receivers.

In addition, the look and feel of geolocational activities can be affected by the type of GPS receiver used. Those genres of geolocational activities, which include player participation through movement, discovery, and other behaviors, generally rely on a core set of functions that are linked together through programming in a playable scripted format. Frequently, these functions include physical locations, undertaking tasks, maintaining a virtual inventory of objects, and "seeing" points of interest, as well as other functions. The means by which a given function may be expressed can vary on different GPS receivers, which can have distinct key and control layouts, display capabilities, and special features. Widely varying or inconsistent interpretations of such core functionality can detract from satisfying geolocational activity experiences.

Therefore, there remains a need for a user interface to functionally organize, build, and display geolocational activities as a combination of graphical, textual, sound, and other data independent of GPS receiver platform, which could be used by creators of geolocational activities in building sharable and consistent experiences.

### DISCLOSURE OF THE INVENTION

A system and method provide a programming environment for building geolocational activities with player interfacing layouts. The interfacing layouts include a Zone Guide page, a "You See" page, an Inventory page, and a Tasks page. Each page is divided into a list of elements and a media display for providing and receiving information for successful geolocational activity play. Controls can be selected to allow a player to navigate through the pages and menus for wirelessly exchanging information. The geolocational activities can include text, sound, and image displays.

An embodiment provides a wireless computing device and a method for presenting geolocational activities through player interfacing layouts. A plurality of cartridges is maintained. Each cartridge includes a script for a geolocational activity that includes events associated with stored geolocational data. A plurality of player interfacing layouts is maintained on a wireless computing device. One of the cartridges is selected based on a request from a user to the wireless computing device. The script is executed for the selected cartridge on the wireless computing device. Geolocational data is collected via the wireless computing device and a location of the wireless computing device is determined by processing the geolocational data. One of the events for the geolocational activity associated with the selected cartridge is triggered when the location of the wireless computing device matches the stored geolocational data for that event. The event for the geolocational activity is displayed to the user via one or more of the player interfacing layouts.

A further embodiment provides a system and method for providing player interfacing layouts for geolocational activities. A plurality of cartridges is maintained. Each cartridge includes events for a geolocational activity. Each event is associated with a zone that includes stored geolocational data defining points interconnected to form a logically enclosed space. One of the cartridges is transferred to a wireless computing device maintained by a user. A location of the wireless computing device is determined by obtaining and processing geolocational data. One of the events is provided on one or more player interfacing layouts when the stored geolocational data for the zone associated with that event matches the location of the wireless computing device. A list of actions is displayed on the one or more player interfacing layouts. User input is processed by selecting one of the actions based on a request from the user. Output is presented in response to the user input.

Still other embodiments of the present invention will become readily apparent to those skilled in the art from the following detailed description, wherein is described embodiments of the invention by way of illustrating the best mode contemplated for carrying out the invention. As will be realized, the invention is capable of other and different embodiments and several details are capable of modifications in various obvious respects, all without departing from the spirit and the scope of the present invention. Accordingly, the drawings and detailed description are to be regarded as illustrative in nature and not as restrictive.

### DESCRIPTION OF THE DRAWINGS

FIGURE 1 is a block diagram showing a wireless computing device for use in playing geolocational activities.
FIGURE 2 is a block diagram showing a system for providing player interfacing layouts for geolocational activities, in accordance with the present invention.
FIGURE 3 is a process flow diagram showing a method for providing player interfacing layouts for geolocational activities, in accordance with the present invention.
FIGURE 4 is a screen shot showing, by way of example, a cartridge selection page for listing cartridges.
FIGURE 5 is a screen shot showing, by way of example, a cartridge introduction page for describing a selected cartridge.
FIGURE 6 is a screen shot showing, by way of example, a new task pop-up message for identifying a new task.
FIGURE 7 is a screen shot showing, by way of example, a Zone Guide page without GPS location coordinates.
FIGURE 8 is a screen shot showing, by way of example, a Zone Guide page with manually entered location coordinates.
FIGURE 9 is a screen shot showing, by way of example, a Navigation page with a compass for determining direction using manually entered coordinates.
FIGURE 10 is a screen shot showing, by way of example, a GPS Wait Page for acquiring a valid GPS signal.
FIGURE 11 is a screen shot showing, by way of example, a Zone Guide page with GPS location coordinates.
FIGURE 12 is a screen shot showing, by way of example, a Navigation page with a compass for determining direction using GPS location coordinates.
FIGURE 13 is a screen shot showing, by way of example, a "You See" page for listing objects.
FIGURE 14 is a screen shot showing, by way of example, a "You See" page with a selected object and action.
FIGURE 15 is a screen shot showing, by way of example, an Inventory page with collected objects.
FIGURE 16 is a screen shot showing, by way of example, a Task page with active, complete, and incomplete tasks.
FIGURE 17 is a screen shot showing, by way of example, a Radar Screen page displaying the location of a player.
FIGURE 18 is a screen shot showing, by way of example, a Character Detail page showing available actions for a selected character.

### BEST MODE FOR CARRYING OUT THE INVENTION

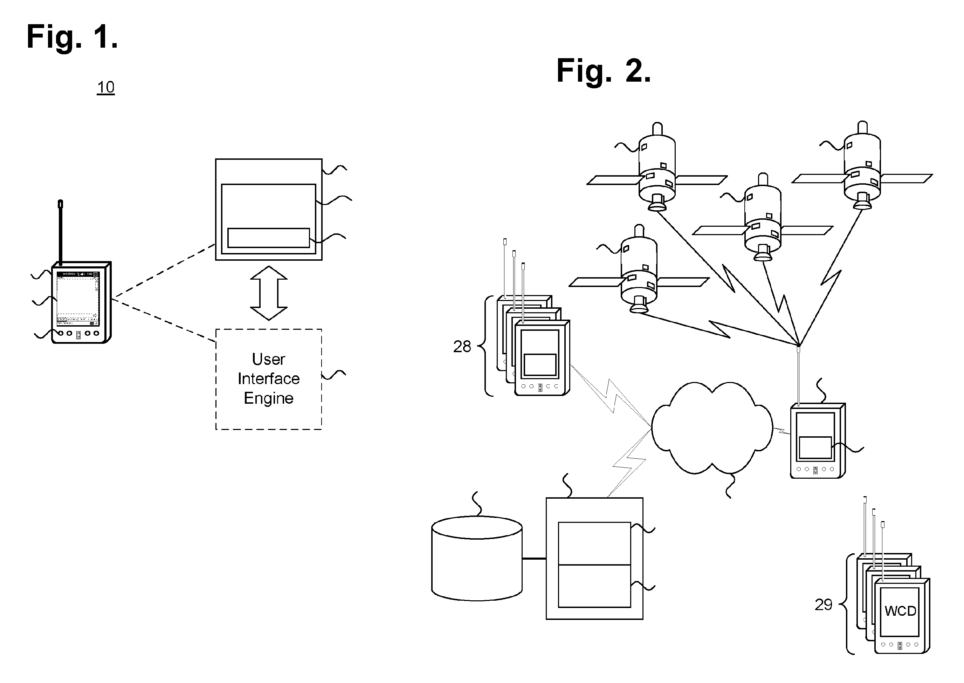

Generally, to play a zone-based geolocational activity, a player must have a mobile device with a GPS receiver for receiving location coordinates. FIGURE 1 is a block diagram 10 showing a wireless computing device (WCD) 11 for use in geolocational activities. The wireless computing device 11 includes a display 12 and device controls 13 to navigate through geolocational zones and to perform tasks. The device controls 13 can include a touch screen, pressable buttons, toggles, knobs, slidable buttons, or switchable buttons. However, other forms of physical or logical device controls are also possible. The WCD 11 can also include an application that includes the programming for the geolocational activity, which can be downloaded onto the WCD 11 from a library on an application Website or other external source. The application includes a scripting engine 15 for executing a script stored in a cartridge 16. Each cartridge 16 can store the scripts for one or more geolocational activities.

In a further embodiment, elements of the user interface (UI) are implemented through a user interface engine 17 that provides UI functionality within the application through an Application Programming Interface (API). For instance, the LUA programming language exports an API for embedded application implementations suitable for use on a programmable GPS receiver. Other forms of user interface engines and APIs are possible.

The application is presented through a specific implementation on a WCD 11. However, other forms and arrangements of devices could be used. At a minimum, a device must be capable of executing a cartridge 16; of determining a location from geolocational data, minimally consisting of latitude and longitude; of providing some form of output responsive to a triggered event; and of receiving data input from the controls 13. Processing devices capable of executing a cartridge 13 include, for example, a personal or laptop computer, either a wireless or standard personal data assistant, a programmable cellular telephone, a programmable pager, a wireless email client, a two-way radio, and a dedicated processing device. The displays and controls for each processing device may be different. Thus, geolocational activity play can differ based on the device used.

### System Overview

FIGURE 2 is a block diagram showing a system 20 for providing user interfaces with player interfacing layouts for geolocational activities. A constellation of global positioning system (GPS) satellites 21 provides geolocational data including latitude, longitude, altitude, and precision to a WCD 22. The WCD 22, incorporating a GPS receiver, receives GPS signals from the GPS satellites 21 and processes the GPS signals to determine location.

To play a geolocational activity, a cartridge 23 that stores the script and data for the activity must be downloaded onto the WCD 22 generally from an external source, such as a centralized server 30 via an internetwork 27, such as the Internet, or similar means for interconnecting computational devices. The centralized server 30 can include a Web server 24 and a database manager 25. The Web server 24 serves Web content to facilitate retrieval of the cartridge 23 from a cartridges database 26 maintained by the database manager 25. Other repositories of geolocational activities are possible.

Typically, a geolocational activity consists of a sequence of events programmed via the script stored in a cartridge 23. Events can be linked to one or more zones, which logically define a space using geolocational coordinates through which the user can physically progress during activity play, or can be defined as global or "world" events, independent of any zone. The events can be triggered based on, for instance, locational, temporal, and independent conditions. In one embodiment, zones can be described using geolocational data to define interconnected points, which together create a logically enclosed space, although other zone descriptions are possible. Events can be triggered as the WCD 22 physically progresses through a zone. More specifically, an event can be triggered when the location coordinates of the WCD 22 overlays stored location coordinates for an event trigger. The player may receive a dialog, such as an interactive, story-like experience, throughout the event sequence via the user interface of the WCD 22. In a further embodiment, the player competes as a character against other player characters who also have WCDs 28. Additionally, the actions of non-player characters who have WCDs 29 can be factored into the progress of the activity.

### User Interface Tabs

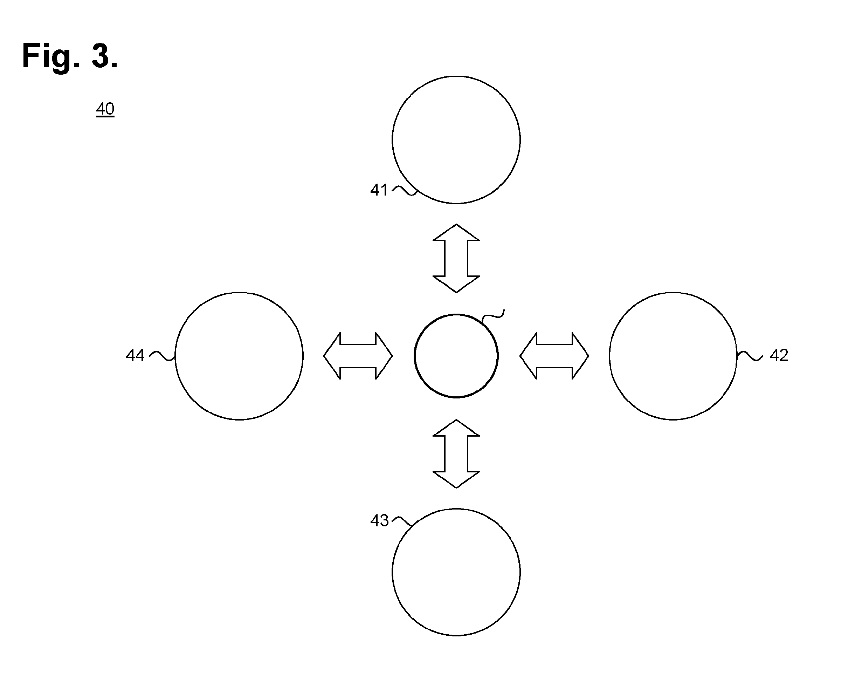

FIGURE 3 is a data flow diagram showing a method 40 for providing player interfacing layouts for geolocational activities. A user interface 45 for a WCD includes controls for performing functions on one or more categories of content pages, including a Zone Guide page 41, a "You See" page 42, an Inventory page 43, and a Tasks page 44. The functions of the content pages allow a player to transmit and receive data using a touch screen, cursor, stylus, toggle, switchable buttons, slidable buttons, pushable buttons, or a combination thereof. Other types of controls can be used to navigate between the content pages and functions listed.

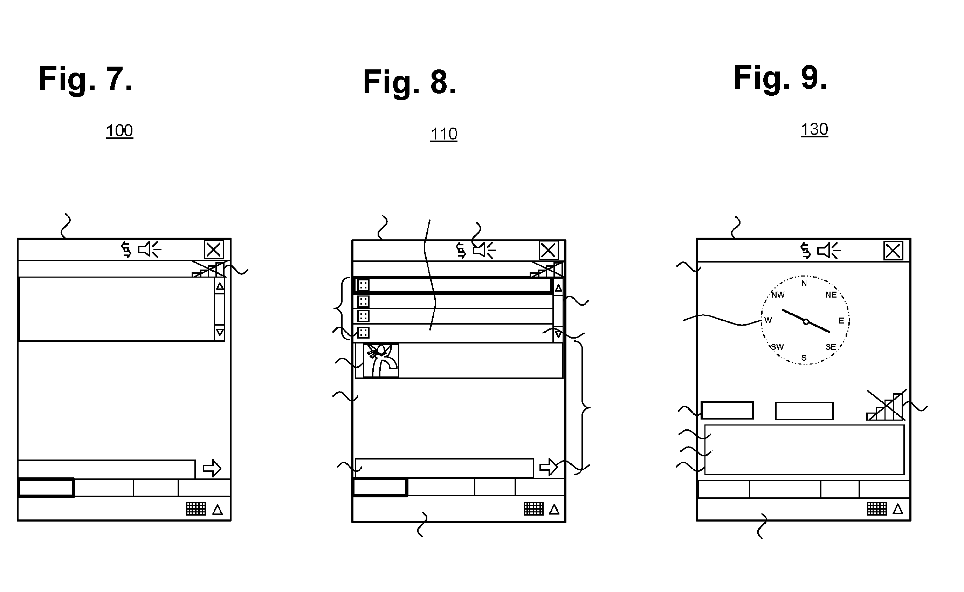

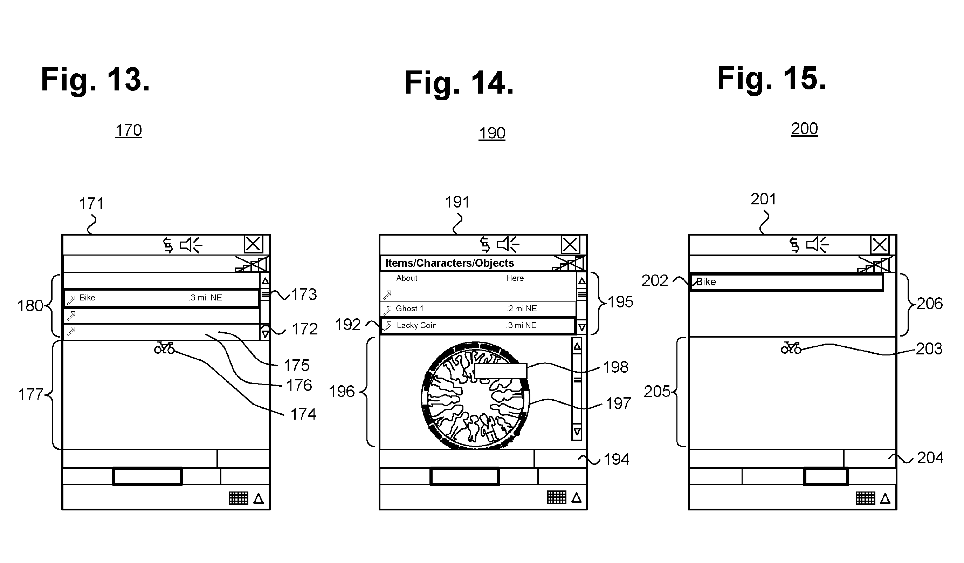

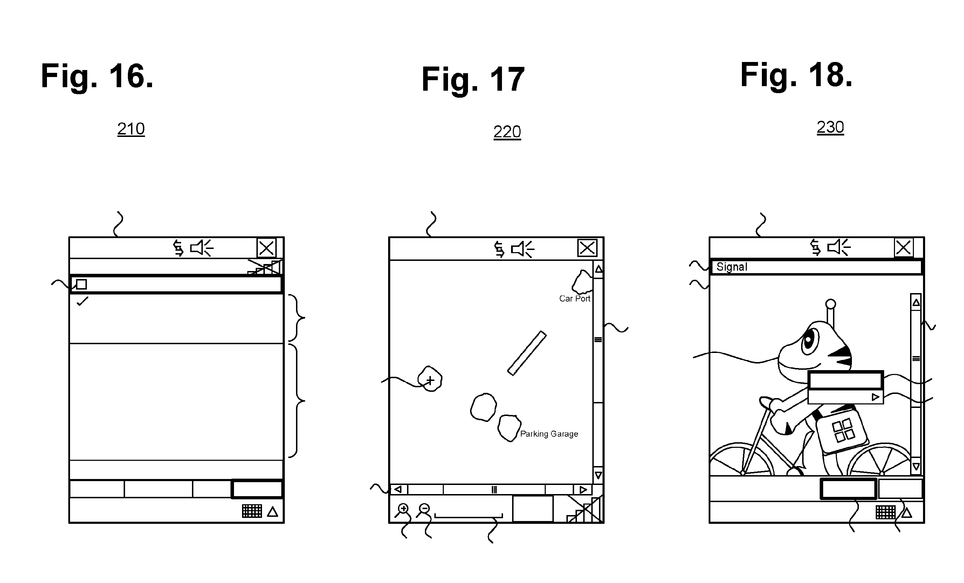

Each category of content page functionally groups specific kinds of interactions. The Zone Guide page 41, for instance, displays current zones in which a player is located, and distant zones with boundaries located a specified distance from the player. Available functions of the Zone Guide page 41 are further described below with reference to FIGURE 8. The "You See" page 42 displays objects, such as items, characters, and goods, at or near the player's location, generally in plain view. Available functions of the "You See" page 42 are further described below with reference to FIGURE 14. The controls of the WCD allow the player to manipulate the objects listed on the "You See" page 42 by performing functions, such as selecting, adding, storing, taking, and placing a selected object into the player's inventory. Alternatively, the player can trade, sell, buy, or give the selected object to another player or character. The objects acquired by the player are listed on the player's Inventory page 43. Available functions of the Inventory page 43 are further described below with reference to FIGURE 15. Finally, the Task page 44 displays active, complete, and incomplete tasks for the player and is further described below with reference to FIGURE 16.

### Activity Cartridges

Zone geolocational activities are stored as scripts on an activity cartridge, which can be built by one or more authors. The cartridges can be downloaded electronically from a Website or other outside source, as described above. Alternatively, a cartridge can be stored on removable media, such as a Secure Digital (SD) memory card, which can be physically inserted into the WCD for access to the cartridge.

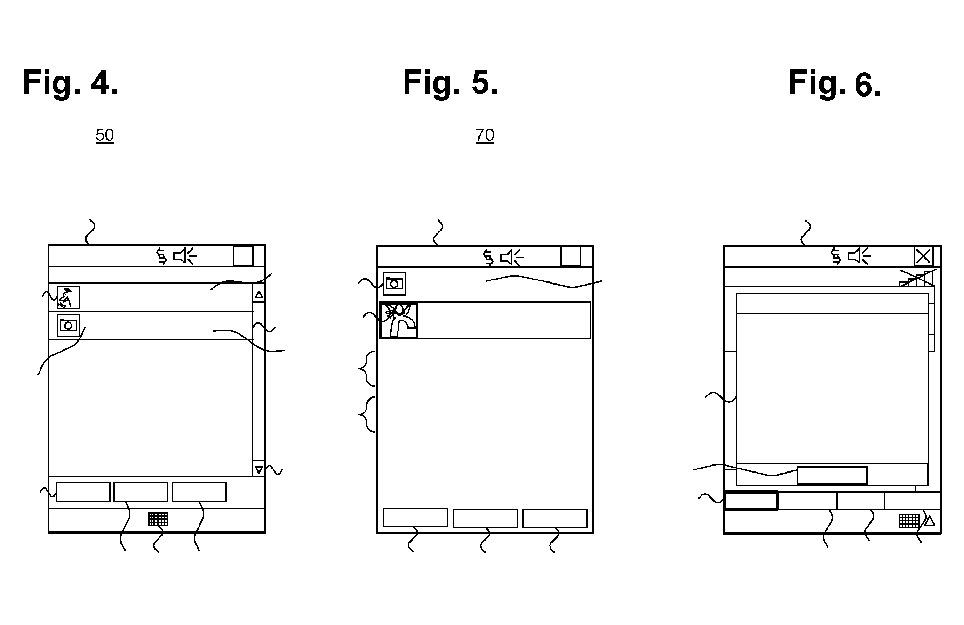

Generally, WCDs are capable of downloading and storing one or one more cartridges. FIGURE 4 is a screen shot 50 showing, by way of example, a Cartridge Selection page 51, which lists available cartridges 52 that have been previously downloaded by a player. The Cartridge Selection page 51 is displayed visually and the list of cartridges 52 can include all downloaded cartridges or alternatively, as filtered by user criteria, such as displaying those cartridges nearest to the player's current physical location. Other forms of cartridge listing are possible.

Each cartridge 52 displayed can include, for instance, a title 54, an activity identifier 55, an icon 53, and a player status 56. Other data is possible. The activity identifier 55 describes the cartridge as belonging to a specific type of activity, including fiction, a puzzle, or a guide. Other types of cartridges are possible, such as a story, sightseeing, or cache. An icon 53 can be associated with the type of cartridge for easy player reference, such as an image of a camera 53 for a guide cartridge. Each listed cartridge 52 also indicates the status 56 of the cartridge, including whether the player has played, completed, or attempted to play a particular cartridge.

Although the cartridge selection page can be accessed without the use of GPS data, the player is provided with additional features when a GPS signal is acquired. For example, without the use of GPS data or manual coordinates, an unfiltered list of all downloaded cartridges can be displayed. However, with GPS data or manual coordinates input, the WCD can display only those cartridges nearest to the player's specified location. A GPS status icon 58 provides a current status of the GPS signal, including no GPS, acquiring GPS, or GPS acquired. Other types of status are possible. If a GPS signal is acquired, the distance and direction of each cartridge's starting location, in relation to the player's current location, can be displayed.

Long lists of cartridges can be difficult to manage and may prevent a player from quickly finding a desired cartridge. The player can sort the list of cartridges by title, distance, type, or status using a column heading (not shown) for conveniently listing and locating a particular cartridge. Additionally, a scroll bar is accessible for displaying and viewing long cartridge lists. The player can move the scroll bar up and down or side to side using a stylus, cursor, touch screen, toggle, or buttons.

After the player has viewed the list of cartridges, the player can select a cartridge by highlighting the desired cartridge using a cursor, button, stylus, touch screen, or a combination thereof. Other controls for selecting a cartridge 52 can also be used. Once selected, the player can further select a gaming option, including playing the cartridge 59, resuming a previously selected cartridge 60, or obtaining further details of the cartridge 61 by selecting the appropriate option using a stylus, button, cursor, toggle, or switch. The gaming options are available for selection by the player after a cartridge 52 has been selected. For example, a player selects and highlights a cartridge entitled "Downtown Test." The cartridge selection page 51 informs the player that the activity type of the cartridge 52 is a "tour guide" and that the player has not yet played the cartridge. Before the player highlights the cartridge 52, the player does not have an option to play or resume. However, once the cartridge 52 is selected and highlighted, the player can choose to play 59, resume 60, or obtain details 61 regarding the cartridge 52. In the described example, the player has chosen to obtain additional information regarding the highlighted cartridge by selecting a details button 61. The player is then transferred to a Cartridge Introduction page.

FIGURE 5 is a screen shot 70 showing, by way of example, a Cartridge Introduction page 71, which displays media, including images, graphics, text, and audio for providing data to a player. A title 73 and icon 72 are displayed for identifying the name and type of activity associated with the selected cartridge. Other identifiers are possible. The player can view a description 75 of the selected cartridge and a starting location 74 for assistance in determining whether he would like to play the cartridge. Additionally, an image 76 may be displayed to show, for instance, a photograph, drawing, or similar rendition of the starting location.

Continuing with the described example, the player can review further detail regarding the "Downtown Test" cartridge. Since the starting location 74 is near the player's current location, the player can decide to play the cartridge by selecting a play button 79. Alternatively, the player can select a close button 77 if he does not want to play the "Downtown Test" cartridge. Further, the player can select to resume 78 a previously selected activity cartridge that remains unfinished. However, if the player did not previously play the selected cartridge, the resume option 78 will be unavailable. Other methods and controls for selecting gaming options are possible.

### Activity Cartridge Play

Zone geolocational activities involve logical zones, through which players travel, objects are stored, and interactions occur. A player is successful if all the tasks provided by a cartridge are completed. Each zone can be defined as a space specified through geolocational measurements, preferably, latitude and longitude measurements, which are selected by an author of the cartridge. The player interacts with the zone by traveling in, near, or around the zone. The player's interaction with the zone is based on the coordinates of his location in relation to the coordinates of the zone.

A series of tasks can be assigned to a specified zone. As the player interacts within a particular zone, a new task can be triggered based on the player's location in, near, or around the zone. Additionally, character interactions can be triggered based on the player's location in relation to the zone or at the start of a new cartridge.

FIGURE 6 is a screen shot 80 showing, by way of example, a task message 83 for identifying a new task. The task message 83 appears as a text, image, or sound message over a page 81, which is displayed. Additionally, the task message 83 can appear in a designated section of the current display or on a separate page. Each task message 83 describes a task to be completed by a player, including traveling to a pre-determined location, finding an object, meeting a character, or solving a puzzle. Other tasks and task message 83 appearances are possible.

Once, the player has received his first task via a task message 83, he can access necessary information for completing the task through content pages, such as a Zone Guide page 85, a "You See" page 86, an Inventory page 87, and a Tasks page 82. At a minimum, each page includes a selection tab for access by a player using a cursor, stylus, touch screen, or push buttons. Other controls for tab selection are possible. Each tab includes a title and a count of elements stored under the tab. Other tabs are possible. For example, before a player receives his first task, the task tab shows a task count set to zero. However, when the task message 83 appears, the new task is added to the task page, and the task count is incremented. To exit the task message 83 and return to a previously displayed page, the player selects an OK button 84.

### Content Pages

To be successful in zone geolocational activities, a player should be able to track elements in select categories, such as zones, objects, inventory, and tasks. However, tracking elements can potentially be time consuming and confusing. The ability to easily track, access, and store the elements allows a player to focus on completing the required tasks. Each category is designated a page for organizing the corresponding elements, thereby facilitating element tracking.

### Zone Guide Page

A listing of zones depends upon the status of the GPS receiver. If the GPS receiver is off, not connected, or not acquired, signals from the satellites for determining the coordinates of the WCD are unavailable and the zones cannot be listed. However, if the GPS receiver is on, the GPS receiver can determine the coordinates of the WCD and can list those zones nearest the current location of the player. Alternatively, the player can physically enter his location coordinates into the WCD, rather than using the GPS receiver to automatically determine the coordinates. The WCD displays a list of zones based on the coordinates entered. Information controls, such as a stylus, cursor, drop down menu, or buttons can be used to enter the player's known coordinates. Other types of information controls are possible.

FIGURE 7 is a screen shot 100 showing, by way of example, a Zone Guide page 101 without GPS 102 location data. The Zone Guide page 101 lists current and distant zones in relation to a player's current location. A current zone is one in which the player is located, whereas a distant zone is located a specified distance away from the player's location.

FIGURE 8 is a screen shot 110 showing, by way of example, a Zone Guide page with manually entered location coordinates 111. If a player knows the coordinates of his location, he can manually enter the coordinates into the WCD for displaying a list of current and distant zones. The location coordinates are entered via a GPS menu 121, using a stylus, cursor, drop down menu, or buttons. Preferably, the coordinates are entered in latitude and longitude measurements, although other ways of specifying location, such as by street address or well-known landmarks are possible.

The Zone Guide page with manually entered coordinates 111 displays a list of zones 122 and a detail area 123. Current zones 112 are identified by a title 114 of the zone and a location identifier 115, such as the word "here," whereas distant zones display a title 114, a distance 115, and a direction 115 of the zone. Other identifiers are possible. The distance 115 is measured from the player's current location to an edge of a corresponding zone. To assist the player in locating a zone, the list of zones can be sorted using, for instance, the zone title 114 or distance 115. For large lists of zones, the player can view the zones 112 listed with the assistance of a scroll bar 116, which can be moved using a toggle, cursor, stylus, touch screen, or press buttons; however, other options for moving the scroll bar are possible. The zone guide page 111 also displays a detail area 123, which provides further information about a selected zone in the list of zones 122. The detail area 123 displays media, such as text 113, images 117, sound 124, or a combination thereof.

Continuing with the described example, the player has traveled to the designated starting location of the cartridge. A first task, as provided by the task message, is to travel to a parking garage. The player enters the coordinates of his current location into the WCD for identifying distant zones. One of the distant zones displayed is the parking garage, which is located 505 feet southeast of the player's current starting location. A direction guide, such as a compass, assists the player in traveling in the correct direction. The player selects an arrow button 119 using a stylus, cursor, touch screen, toggle, or buttons to continue to a Navigation page having a compass.

FIGURE 9 is a screen shot 130 showing, by way of example, a Navigation page 131 with a compass 132 for determining direction, which is based on the coordinates of a selected zone and manually entered location coordinates of the player. A direction box 133 records the direction 134 and speed 135 of the player as he moves from a current location to the selected location 138. However, to record this movement, the WCD must utilize a GPS receiver. The player's direction and speed cannot be measured if there is no GPS receiver. The player can select a back button 136 to return to the Zone Guide page 131. Alternatively, the player can select a GPS menu 139 for acquiring GPS signals.

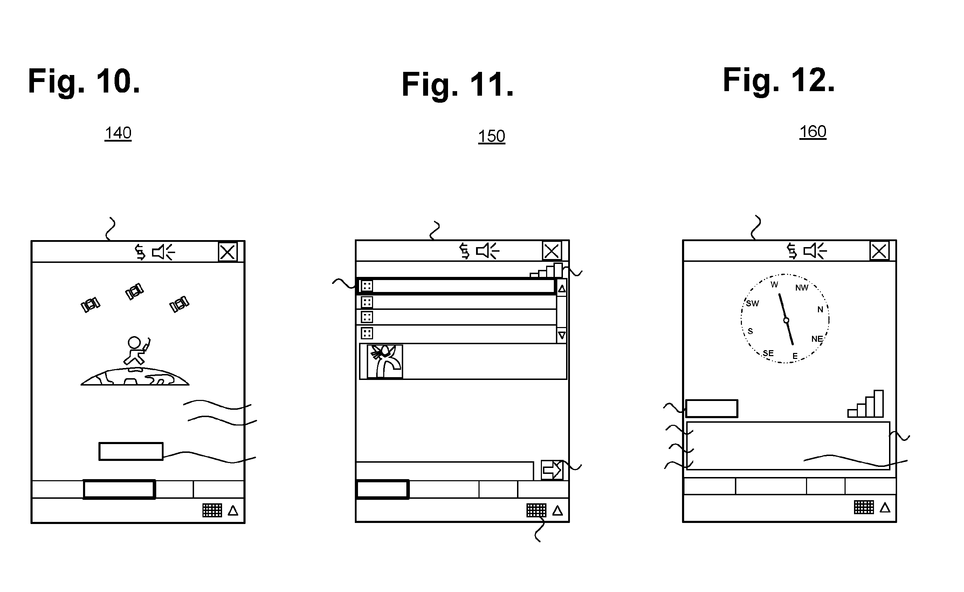

FIGURE 10 is a screen shot 140 showing, by way of example, a GPS Wait page 141 for acquiring a valid GPS signal fix. A GPS receiver receives GPS satellite signals and processes the signals to determine the geolocational coordinates of the WCD used by the player. The Wait page 141 is displayed while the GPS receiver receives and processes the signals for determining the coordinates. Media, such as text, image, and sound data, can be displayed on the Wait page 141. Additionally, a count of active 142 and tracked 143 satellites can be displayed. Other data could also be displayed. The player selects a close button 144 to exit the Wait page 141 and to return to a previous page while the GPS receiver is acquiring a valid GPS signal fix.

Once the GPS receiver has been activated, the distance from each zone listed on the Zone Guide page can be based on the player's location as determined by the GPS, rather than on a manually entered location measurement. FIGURE 11 is a screen shot 150 showing, by way of example, a Zone Guide page with GPS geolocational data 151. A GPS status icon 153 displays the current status of the GPS receiver, including no GPS information, acquiring GPS information, or GPS information acquired. More particularly, a GPS status bar 152 can display an image, which indicates the strength of the GPS signals received. The player can obtain navigational information for a selected zone by highlighting the zone and selecting an arrow button 154.

FIGURE 12 is a screen shot 160 showing, by way of example, a Navigation page 161 using GPS geolocational data. A direction box 163 records the direction 164 and speed 165 of a player's movement. Additionally, measurements for the horizontal dilution of precision (HDOP) 166 and accuracy 167 can be included. The HDOP 166 allows a player to precisely estimate the accuracy of a GPS horizontal fix using latitude and longitude measurements. Accuracy 167 measures how close a GPS measurement is to a true location to compensate for inherent GPS imprecision. The values of the measurements in the direction box 163 change as the player moves from one location to another, which assists the player in determining whether he is traveling in the correct direction. To return to a previous page, the player selects a back button 168.

### "You See" Page

Zone geolocational activities generally require a player to complete one or more tasks, which can include traveling to a specific location, solving a puzzle, finding an object, or meeting a character. Other tasks are possible. A "You See" page allows the player to visualize the virtual objects located near the player's current position. FIGURE 13 is a screen shot 170 showing, by way of example, a "You See" page 171 for listing objects 172. The "You See" page 171 is divided into a list of objects 180 and a detail media 177. Other divisions are possible. The list of objects 180 includes items or characters, which are located near the player. Each object is listed with a name 172, distance 176, and direction 175 of the object. The distance 176 is measured from the player's current location to the corresponding object. The list of objects 180 can be sorted using the name 172, distance 176, or type of object to assist a player in locating a specific object. Other sorting criteria are possible. The "You See" page 171 also includes a detail area 177 for displaying media, such as text, sound, and image data.

An image 174 of each listed object can appear in the detail area 177 as the player highlights a row corresponding to the object. A scroll bar 173, located in the list of objects 180, allows the player to review one or more objects using a touch screen, cursor, stylus, toggle, or push buttons to move the scroll bar up, down, left, or right. Additionally, the player can use a scroll bar in the detail area 177 to view large objects. Other controls for moving the scroll bar can also be used.

FIGURE 14 is a screen shot 190 showing, by way of example, a "You See" page 191 with a selected object and action. A player selects a desired object 192 from a list of objects 195 using a cursor, stylus, toggle, touch screen, or buttons. Once the object 192 is highlighted, the player selects an action button 194 for listing available actions for the selected object 192. Continuing with the described example, the player's first task is to travel to a parking garage. His second task is to find a lackey coin and give the lackey coin to a frog located along a path from a starting point to a desired end point. The player's starting location is located in a zone entitled "Groundspeak." The lackey coin 197 is located 0.3 miles northeast of the player's starting location. Since the lackey coin 197 is located near the player's current location, the player travels to the location of the lackey coin on his way to the parking garage.

After locating the lackey coin 197 by traveling to the identified location, the player highlights the corresponding row in the list of objects 195 and an image of the lackey coin 197 appears in a detail area 196 on the WCD. The player selects an object actions button 194 for displaying a list of available actions 198, including take, leave, give, and ignore the object. Other actions are possible. The list of actions may appear as a menu located over the "You See" page 191 or alternatively, the list can appear as a separate page. The player takes 198 the lackey coin 197 for "storage" in an inventory page. Upon meeting the frog, the player can take the lackey coin from his inventory page to "give" to the frog.

### Inventory Page

FIGURE 15 is a screen shot 200 showing, by way of example, an Inventory page 201 with collected objects 202, which are displayed by title. The Inventory page 201 includes a list of objects 202 acquired by a player during geolocational activity play. As the list of objects grows, a particular object may become hard to find in the list. The list of objects can be stored by alphabetical order, zone, or type of object. Other sorting criteria are possible. Alternatively, the player can search for an object by entering a name of the object. The player can select and highlight at least one of the objects, which is displayed in a detail area 205. Next, the player can select actions for performing some action upon the highlighted object using an inventory action button 204 to display a list of available actions, which include giving, taking, selling, trading, hiding, and delivering the highlighted object. However, other inventory actions are possible. The list of actions may appear as a menu over the Inventory page 201 or on a separate page. The player selects the inventory action button 204 and available actions using controls, such as a stylus, cursor, toggle, touch screen, or buttons. Other controls are also possible.

### Tasks Page

FIGURE 16 is a screen shot 210 showing, by way of example, a Tasks page 211 for listing active, complete, and incomplete tasks. The Tasks page 211 includes a list area 212 and a detail area 213. Other areas are possible. The list area 212 displays active, complete, or incomplete tasks for a specific cartridge. Symbols, such as a box, arrow, check mark, or an 'X,' display the status of a task 214. Other symbols or notations are possible. A player can highlight the task 214 using a stylus, cursor, toggle, touch screen, or buttons for displaying further detail in the detail area 213. The detail area 213 includes media, such as text, image, and sound data, or a combination thereof.

A completed task may include the date and time that the task was completed. In contrast, an incomplete task may display task completion requirements and complexity. Moreover, an active or pending task may include hints or clues for completing the task. Other completed, incomplete, and active task information is possible. The list of tasks 212 can be sorted based on completion status, complexity, and location of the task, as well as other criteria.

Tasks can involve traveling to a pre-determined location, finding defined objects, meeting characters, and solving puzzles. Other tasks are possible. A GPS receiver provides location coordinates for the WCD used by the player. However, the coordinates may not be helpful unless the player has a map to determine the location of the coordinates in relation to a street, known landmark, or other geographical area or marker. FIGURE 17 is a screen shot 220 showing, by way of example, a Radar Screen page 221 showing the location of a player. The Radar Screen page 221 displays an outline of each zone near the player's location, which is identified by a symbol 224, such as an 'X.' However, other symbols and notations can be used. The player can zoom in 225 or out 226 by selecting a zoom icon 225, 226, such as a magnifying glass, and placing the magnifying glass over the zone that the player wishes to enlarge or make smaller. A distance scale 227 can also be included on the Radar Screen page 221 to assist the player in determining an approximate distance between his location and another location.

As the player travels from one location to another, events can be triggered as the player transitions between, within, and around the zones. The location of a WCD is identified based on the location of the WCD or manually entered coordinates, and an event may be triggered when the geolocational data of the WCD overlays the geolocational data stored for the trigger condition. Events include traveling from one location to another, meeting a specified character, solving a puzzle, or obtaining an object. Other events are possible.

FIGURE 18 is a screen shot 230 showing, by way of example, a Character Detail page 231 showing valid actions 237, 238 for a selected character 233. An image of the virtual character 233 can be displayed with the character's name 239 or other information. A player can view the complete image using a scroll bar, and a stylus, cursor, touch screen, toggle, or buttons for moving the scroll bar. Once the player's physical location corresponds to the stored location for triggering an interaction with the character 233, the character 233 can appear on the player's WCD via the Character Detail page 231. The player then selects a character actions button 235 for listing available interactions 237, 238 with the character. The interactions 237, 238 include speaking to, handing to, giving to, taking from, ignoring, selling to, buying from, or accepting from the selected character a particular object, message, or hint. Otherwise, if the player does not wish to interact with the character, the player can select a close button 236 for returning to a previous page. Other interactions are possible.

Continuing with the described example, the player has found and stored a lackey coin for giving to a frog while traveling to the parking garage. Upon encountering the frog, the player selects the character action button 235 using a stylus, cursor, toggle, touch screen, or buttons for displaying the list of character interactions 237, 238. After the list of possible interactions 237, 238 is displayed and the desired object is found, the player selects a hand to action 237 for giving the lackey coin to the frog. The available interactions may appear as a menu over the character detail page 231 or alternatively, as a separate page. Once the player completes the task of finding the frog and delivering the lackey coin, the player's second task is recorded as complete on the Tasks page and a new task can be provided. The player selects the close button 236 to return to a previous screen for completing the remaining tasks.

While the invention has been particularly shown and described as referenced to the embodiments thereof, those skilled in the art will understand that the foregoing and other changes in form and detail may be made therein without departing from the spirit and scope of the invention.

## Claims

1. A wireless computing device (11), comprising:
memory configured to maintain a plurality of cartridges (16), which each comprise a script for a geolocational activity comprising events associated with stored geolocational data (163);
storage configured to maintain a plurality of player interfacing layouts (45);
a script engine (15) configured to select one of the cartridges (16) based on a request from a user;
a receiver configured to collect geolocational data (163) and further configured to determine a location for a current physical position by processing the geolocational data (163);
a processor configured to trigger one of the events for the geolocational activity associated with the selected cartridge (16) when the location of the current physical position matches the stored geolocational data (163) for that event; and
a display configured to present the event for the geolocational activity to the user via one or more of the player interfacing layouts (45).

2. A wireless computing device (11) according to Claim 1, wherein the player interfacing layouts (45) comprise one or more of a zone guide page (151), a display page (171), an inventory page (201), an event page (211), a character page (231), and a navigation page (161).

3. A wireless computing device (11) according to Claim 1 or 2, further comprising:
a compass (132) configured to determine a direction (164) of the current physical location; and
a map (221) configured to display the direction (164) and the location for the current physical location.

4. A wireless computing device (11) according to any preceding claim, further comprising:
a cartridge module configured to maintain a list of the cartridges (16); and
a cartridge display module configured to display only those cartridges (16) that have a starting location near the location of the wireless computing device (11).

5. A wireless computing device (11) according to any preceding claim, further comprising:
an event module configured to maintain an event list (212), comprising:
an event list module configured to list the events; and
an event status module configured to assign a status to each event comprising one of complete, incomplete, and pending.

6. A wireless computing device (11) according to any preceding claim, further comprising:
an object module configured to display geolocational objects comprising one or more of items, goods, and characters (233);
an object selection module configured to select at least one of the geolocational objects by performing an action (237, 238) based on a user request; and
an inventory module configured to store the selected geolocational object on an inventory list.

7. A method (40) for presenting geolocational activities through player interfacing layouts (45), comprising:
maintaining a plurality of cartridges (16), which each comprise a script for a geolocational activity comprising events associated with stored geolocational data (163);
maintaining a plurality of player interfacing layouts (45) on a wireless computing device (11);
selecting one of the cartridges (16) based on a request from a user to the wireless computing device (11);
executing the script for the selected cartridge (16) on the wireless computing device (11), comprising:
collecting geolocational data (163) via the wireless computing device (11) and determining a location of the wireless computing device (11) by processing the geolocational data (163); and
triggering one of the events for the geolocational activity associated with the selected cartridge (16) when the location of the wireless computing device (11) matches the stored geolocational data (163) for that event; and
displaying the event for the geolocational activity to the user via one or more of the player interfacing layouts (45).

8. A method (40) according to Claim 7, wherein the player interfacing layouts (45) comprise one or more of a zone guide page (151), a display page (171), an inventory page (201), an event page (211), a character page (231), and a navigation page (161).

9. A method (40) according to Claim 7 or 8, further comprising:
determining a direction (164) of the wireless computing device (11) using a compass (132); and
displaying the direction (164) and the location of the wireless computing device (11) on a map (221).

10. A method (40) according to any one of claims 7 to 9, further comprising:
maintaining a list of the cartridges (16); and
displaying only those cartridges (16) that have a starting location near the location of the wireless computing device (11).

11. A method (40) according to any one of claims 7 to 10, further comprising:
maintaining an event list (212), comprising:
listing the events; and
assigning a status to each event comprising one of complete, incomplete, and pending.

12. A method (40) according to any one of claims 7 to 9, further comprising:
displaying geolocational objects comprising one or more of items, goods, and characters (233);
selecting at least one of the geolocational objects by performing an action (237, 238) based on a user request; and
storing the selected geolocational object on an inventory list.

13. A system (20) for providing player interfacing layouts (45) for geolocational activities, comprising:
a database configured to maintain a plurality of cartridges (16), which each comprise events for a geolocational activity, wherein each event is associated with a zone comprising stored geolocational data (163) defining points interconnected to form a logically enclosed space;
a cartridge module to transfer one of the cartridges (16) to a wireless computing device (11) maintained by a user;
a location module configured to determine a location of the wireless computing device (11) by obtaining and processing geolocational data (163);
an event module configured to provide one of the events on one or more player interfacing layouts (45) when the stored geolocational data (163) for the zone associated with that event matches the location of the wireless computing device (11);
a display module configured to display a list of actions on the one or more player interfacing layouts (45);
an input module configured to process user input by selecting one of the actions based on a request from the user; and
an output module configured to present output in response to the user input.

14. A method (40) for providing player interfacing layouts (45) for geolocational activities, comprising:
maintaining a plurality of cartridges (16), which each comprise events for a geolocational activity, wherein each event is associated with a zone comprising stored geolocational data (163) defining points interconnected to form a logically enclosed space;
transferring one of the cartridges (16) to a wireless computing device (11) maintained by a user;
determining a location of the wireless computing device (11) by obtaining and processing geolocational data (163);
providing one of the events on one or more player interfacing layouts (45) when the stored geolocational data (163) for the zone associated with that event matches the location of the wireless computing device (11);
displaying a list of actions on the one or more player interfacing layouts (45);
processing user input by selecting one of the actions based on a request from the user; and
presenting output in response to the user input.
